(19) Europäisches Patentamt
European Patent Office
Office européen des brevets

(11) **EP 2 175 673 A1**

(12) **EUROPEAN PATENT APPLICATION**
published in accordance with Art. 153(4) EPC

(43) Date of publication:
**14.04.2010 Bulletin 2010/15**

(51) Int Cl.:
*H04W 4/00* (2009.01)    *H04W 88/08* (2009.01)

(21) Application number: **08791927.0**

(22) Date of filing: **30.07.2008**

(86) International application number:
**PCT/JP2008/063696**

(87) International publication number:
**WO 2009/017168 (05.02.2009 Gazette 2009/06)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.07.2007   JP 2007198432**

(71) Applicant: **NTT DoCoMo, Inc.**
**Chiyoda-ku**
**Tokyo 100-6150 (JP)**

(72) Inventors:
• **IWAMURA, Mikio**
  **Tokyo 100-6150 (JP)**
• **ISHII, Minami**
  **Tokyo 100-6150 (JP)**

(74) Representative: **HOFFMANN EITLE**
**Patent- und Rechtsanwälte**
**Arabellastrasse 4**
**81925 München (DE)**

(54) **BASE STATION DEVICE AND METHOD IN MOBILE COMMUNICATION SYSTEM**

(57)    A base station for a mobile communication system includes a scheduling unit configured to obtain scheduling information of radio bearers at least for each user and to allocate radio resources to the radio bearers based on the scheduling information. When a user is handed over from a cell of the base station to a cell of a target base station, the base station reports a part of previous scheduling information of the user via an inter-base-station interface to the target base station.

## FIG.1

EP 2 175 673 A1

**Description**

TECHNICAL FIELD

The present invention generally relates to mobile communication technologies. More particularly, the present invention relates to a base station and a method for a mobile communication system where packet scheduling is performed.

BACKGROUND ART

Successor communication systems, such as Long Term Evolution (LTE), to wideband code division multiple access, high speed downlink packet access (HSDPA), and high speed uplink packet access (HSUPA) are currently being discussed by 3GPP, a standardization group for W-CDMA (for radio control methods of LTE, see, for example, 3GPP TS 36.300 (V8.0.0), "Evolved Universal Terrestrial Radio Access (E-UTRA) and Evolved Universal Terrestrial Radio Access Network (E-UTRAN); Overall description; Stage 2," March 2007). In LTE, orthogonal frequency division multiplexing (OFDM) is to be used as a downlink radio access method and single-carrier frequency division multiple access (SC-FDMA) is to be used as an uplink radio access method (see, for example, 3GPP TR 25.814 (V7.0.0), "Physical Layer Aspects for Evolved UTRA," June 2006).

In both downlink and uplink of an LTE system, one or more resource blocks are allocated to mobile stations for communications. Resource blocks are shared by many mobile stations in the system. Although user devices (or user equipment) communicating in an LTE system are called mobile stations for descriptive purposes here, user devices may also include fixed stations. In LTE, a base station performs a process called scheduling to select mobile stations to which resource blocks are to be allocated in each subframe (e.g., 1 ms). A subframe may also be called a transmission time interval (TTI). In downlink, the base station transmits a shared channel using one or more resource blocks to mobile stations selected in the scheduling. In uplink, mobile stations selected in the scheduling transmit a shared channel using one or more resource blocks to the base station.

In a communication system employing shared channels as described above, it is necessary to signal (or report) allocation information of the shared channels to user devices. In LTE, a control channel used for this signaling is called a physical downlink control channel (PDCCH) or a DL-L1/L2 control channel. The physical downlink control channel, for example, includes downlink scheduling information, acknowledgement information (ACK/NACK), an uplink scheduling grant, an overload indicator, and a transmission power control command bit (see, for example, 3GPP, R1-070103, Downlink L1/L2 Control Signaling Channel Structure: Coding).

The downlink scheduling information and the uplink scheduling grant correspond to the allocation information to be reported. The downlink scheduling information, for example, includes information for a downlink shared channel such as downlink resource block allocation information, identification information of user devices (UE IDs), the number of streams, information regarding precoding vectors, data sizes, modulation schemes, and information regarding hybrid automatic repeat request (HARQ). The uplink scheduling grant, for example, includes information for an uplink shared channel such as uplink resource block allocation information, UE IDs, data sizes, modulation schemes, uplink transmission power information, and information regarding a demodulation reference signal used in uplink MIMO.

Various algorithms may be used for the scheduling. For example, to improve the throughput of the entire system, a C/I method (MAX-C/I method) that allocates radio resources preferentially to users (radio bearers) with good radio propagation conditions may be used. Alternatively, a proportional fairness algorithm may be used to achieve fairness among users in addition to improving the throughput. In the proportional fairness algorithm, a ratio of an instantaneous throughput to an average throughput is calculated for each user or radio bearer, and radio resources are allocated based on the calculated ratios. For example, a ratio of an estimated instantaneous throughput R(j;t) (i.e., an instantaneous transmission rate estimated based on propagation conditions) to an average throughput Rav(j;t) obtained from previous throughputs (transmission rates) is calculated for each radio bearer j, and radio resources are allocated preferentially to a radio bearer i with a higher ratio as expressed by the following formula (A):

$$i(t)=arg[max\{R(j;t)/Rav(j;t)\}] \qquad (A)$$

In other words, in the proportional fairness method, even if an instantaneous throughput of a radio bearer i is higher than the instantaneous throughputs of other radio bearers j, radio resources are not allocated to the radio bearer i unless its instantaneous throughput is considerably higher than the average of its previous throughputs. Meanwhile, even if an instantaneous throughput of a radio bearer i is lower than the instantaneous throughputs of other radio bearers j, radio resources are allocated to the radio bearer i if its instantaneous throughput is considerably higher than the average of its previous throughputs. Thus, a proportional fairness algorithm makes it possible to achieve fairness among users in addition to improving the throughput of the entire system. Scheduling methods based on throughput are described, for example, in "Data throughput of CDMA-HDR a high efficiency-high data rate personal communication wireless system," A. Jalali, R. Padovani, and R. Pankaj, IEEE Proc. VTC Spring 2000, pp. 1854-1858, May 2000. Also, a different proportional fairness algorithm that performs scheduling based on signal quality (SIR or CQI) is described in "Comparison of packet scheduling algorithms focusing on user throughput in high speed downlink packet access," Y. Ofuji, S. Abeta, and M. Sawahashi, IEICE Trans. Commun., vol. E86-B, no. 1, pp. 132-141, Jan. 2003. In this algorithm, R(j;t) in the above formula (A) is replaced by an instantaneous SIR or CQI and Rav(j;t) is replaced by an average SIR or CQI. Further, still other scheduling algorithms are described in "Scheduling algorithms for a mixture of real-time and non-real-time data in HDR," S. Shakkottai and A. Stolyar, Proc 17th International Teletraffic Congress (ITC-17), Salvador de Bahia, Brazil, Sept. 2001. This document discloses scheduling algorithms, such as a Modified Longest Weighted Delay First (M-LWDF) algorithm and an exponential algorithm, that employ a delay element in addition to an average throughput (or SIR or CQI) for scheduling. In the M-LWDF algorithm and the exponential algorithm, scheduling is performed taking into account buffering time (waiting period in a buffer) of packets such that packets with longer buffering times are preferentially transmitted. Taking into account the buffering time in scheduling makes it possible to improve the performance of real-time services.

## DISCLOSURE OF INVENTION

## PROBLEMS TO BE SOLVED BY THE INVENTION

In a proposed next generation mobile communication system, base stations perform scheduling independently of each other. Therefore, when a user is handed over to another cell (target cell), the scheduling in the target cell is performed by a base station (target base station) of the target cell. As described above with reference to the formula (A), in a proportional fairness algorithm, scheduling is performed based on an average Rav(j;t) of previous throughputs. However, since such an average value is not available in a target base station immediately after handover, a default value is used for the average value and the average value is updated based on actual measurements as communications are performed by the user in the target cell. This means that immediately after handover, the value of the average throughput (or SIR or CQI) Rav(j;t) for a user may not be appropriate and the scheduling results may not be fair to the user. In other words, immediately after a user is handed over, a proportional fairness algorithm may not be able to achieve fairness for the user. Similarly, with any scheduling algorithm employing an average of previous throughputs (or SIRs or CQIs), it is expected that the intended effect and scheduling performance of the algorithm may not be achieved until averages of previous throughputs (or SIRs or CQIs) of users are obtained. In LTE, as described in 3GPP TS 36.300 (V8.0.0), it is possible to transfer unsent packets or unsent acknowledgement packets to a target base station when a user is handed over to the target base station. However, information on the buffering time of packets is not transferred to the target base station. Therefore, the target base station cannot determine buffering time of packets of a user handed over from a previous base station (source base station) and the performance of a scheduler employing buffering time may be reduced. This may affect the performance of all users communicating with the target base station in addition to the performance of the user who has just been handed over.

One object of the present invention is to maintain scheduling performance even for a user who has just been handed over. For example, an aspect of the present invention makes it possible for a scheduler based on a proportional fairness algorithm to achieve fairness among users even immediately after handover takes place.

## MEANS FOR SOLVING THE PROBLEMS

An aspect of the present invention provides a base station for a mobile communication system. The base station includes a scheduling unit configured to obtain scheduling information of radio bearers at least for each user and to allocate radio resources to the radio bearers based on the scheduling information. When a user is handed over from a cell of the base station to a cell of a target base station, the base station reports a part of previous scheduling information of the user via an inter-base-station interface to the target base station.

## ADVANTAGEOUS EFFECT OF THE INVENTION

An aspect of the present invention makes it possible to maintain scheduling performance even for a user who has just been handed over. For example, an aspect of the present invention makes it possible for a scheduler based on a proportional fairness algorithm to achieve fairness among users even immediately after handover takes place.

## BRIEF DESCRIPTION OF THE DRAWINGS

FIG. 1 is a drawing illustrating a mobile communication system according to an embodiment of the present invention;
FIG. 2 is a sequence chart showing a process according to an embodiment of the present invention;
FIG. 3 is a schematic block diagram illustrating a base station according to an embodiment of the present invention; and
FIG. 4 is a drawing illustrating a hierarchical model related to downlink transmission at a base station.

## EXPLANATION OF REFERENCES

| | |
|---|---|
| UE | User device |
| eNB | Base station |
| MME/SAE-GW | Upper node |
| S1 I/F | Interface between base station and upper node |
| X2 I/F | Interface between base stations |
| NW I/F | Network interface |
| 302 | Duplexer |
| 304 | RF reception unit |
| 306 | L1/L2 processing unit |
| 308 | RRC processing unit |
| 310 | Measuring unit |
| 312 | Scheduler |
| 314 | Inter-base-station communication processing unit |
| 316 | Network interface |
| 318 | Base-station-and-upper-node communication processing unit |
| 320 | RF transmission unit |

## BEST MODE FOR CARRYING OUT THE INVENTION

According to an aspect of the present invention, a source base station reports an average value of measurements (such as throughputs, SIRs, CQIs, or buffering time) regarding a user leaving its cell to a target base station (neighboring base station) via an inter-base-station interface X2 I/F. The target base station performs scheduling for the user entering its cell based on the reported average value. With this configuration, scheduling for a user handed over to a target base station is performed based on an average value calculated at a source base station instead of a default value. Thus, this configuration makes it possible to maintain the scheduling performance even for a user who has just been handed over. For example, this configuration makes it possible for a scheduler based on a proportional fairness algorithm to improve the throughput of the entire system as well as to achieve fairness among users even immediately after handover takes place.

An average throughput reported to a target base station may also be used for active queue management (AQM) (a packet dropping scheme) at the target base station. AQM is used to optimize the transmission window of a transport protocol (e.g., TCP) and thereby to prevent buffer overflow at a base station. To properly perform active queue management, it is necessary to use measurements of throughput. Accordingly, even immediately after handover, it is possible to properly perform active queue management at the target base station by using an average throughput reported from the source base station

According to an embodiment of the present invention, "scheduling information" (information used for scheduling) of a radio bearer may include any one of the following: throughput, signal quality (received uplink SIR, CQI reported by the user device (based on received downlink SIR), or propagation loss), and buffering time of packets. More generally, any appropriate radio resource management (RRM) information may be transferred from the source base station to the target base station. An average throughput may be reported for each radio bearer to the target base station. Average signal quality may be reported for each user to the target base station. Buffering time may be reported to the target base station for each packet to be transferred via the X2 I/F to the target base station when a user is handed over.

A scheduling unit may be configured to perform scheduling based on a ratio of an instantaneous value to an average value of, for example, throughput according to the following formula: $i(t)=\arg[\max\{R(j;t)/R_{av}(j;t)\}]$.

An average value such as an average throughput may be reported to the target base station when a handover request is transmitted to the target base station. This is preferable to properly determine whether to accept the handover request at the target base station.

In the present application, throughput may be represented by any appropriate measurement. For example, throughput may be represented by a data transmission rate (bps/Hz) or the amount of data transmitted or received.

«FIRST EMBODIMENT»

<OUTLINE>

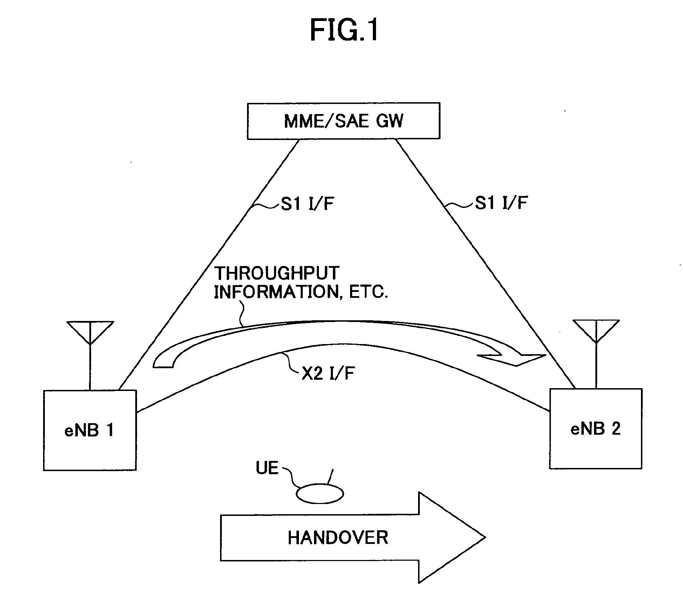

FIG. 1 shows a mobile communication system according to an embodiment of the present invention. As shown in FIG. 1, the mobile communication system includes a user device UE, a first base station eNB1, a second base station eNB2, and an upper node MME/SAE-GW. The first and second base stations eNB1 and eNB2 are connected via an S1 interface (S1 I/F) to the upper node MME/SAE-GW. The first base station eNB1 and the second base station eNB2 are connected to each other via an X2 interface (X2 I/F). For descriptive purposes, it is assumed that the user device UE in a cell of the first base station eNB1 is to move (to be handed over) to a cell of the second base station eNB2. In other words, in this example, the first base station eNB1 is a source base station and the second base station eNB2 is a target base station. It is also assumed that the cells of the first and second base stations eNB1 and eNB2 are located next to each other. In an actual case, the number of cells may be greater than two. Each base station measures throughput of respective uplink and downlink radio bearers and performs scheduling according to a proportional fairness algorithm based on the measurements. The scheduling results are reported (signaled) to the user device UE via a downlink L1/L2 control channel. Based on the reported scheduling results, the user device UE receives a physical downlink shared channel (PDSCH) and/or transmits a physical uplink shared channel (PUSCH).

In this embodiment, when the user device UE is handed over, the source base station eNB1 reports a calculated average throughput (or average signal quality) of the user device UE to the target base station eNB2 via the X2 I/F. The target base station eNB2 performs scheduling for the handed-over user device UE based on the reported average throughput (or the average signal quality). In this point, this embodiment is different from related-art technologies where scheduling immediately after handover is performed based on a default value.

<PROCESS>

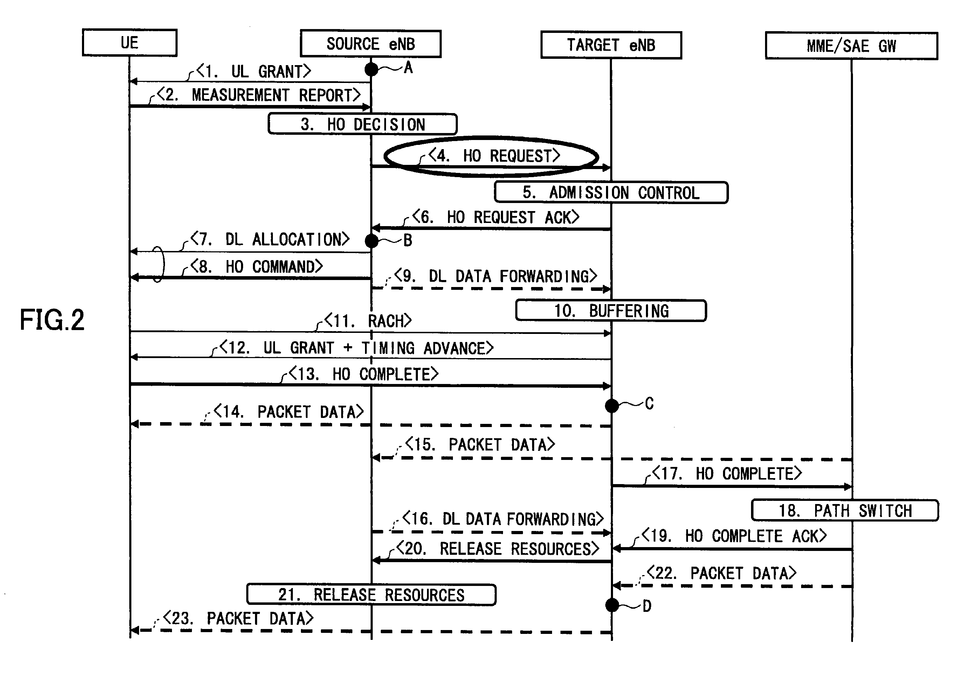

FIG. 2 is a sequence chart showing an exemplary process according to an embodiment of the present invention. Although steps shown in FIG. 2 are described below in ascending order of reference numbers, the order of steps may be changed where appropriate. Also, the number of steps may be changed. In FIG. 2, A, B, C, and D indicate timings where scheduling is performed. However, scheduling may also be performed at any other timings.

1. UL grant

A source base station eNB performs scheduling (A) and allocates uplink radio resources to a user device UE. The scheduling is performed according to a proportional fairness algorithm. More particularly, the source base station eNB measures throughput of uplink and downlink radio bearers; obtains an instantaneous throughput, an average throughput, and a ratio of the instantaneous throughput to the average throughput for each of the radio bearers; and selects radio bearers (or users) to which radio resources are to be allocated based on the obtained ratios. The allocation information is described in an uplink grant included in a downlink L1/L2 control channel.

2. Measurement report

The user device UE obtains various measurements related to its own cell and neighboring cells. For example, when a handover event is detected, the user device UE transmits a measurement report including the measurements to the source base station eNB by using the radio resources allocated by the source base station eNB.

3. HO decision

Upon receiving the measurement report, the source base station eNB determines to hand over the user device UE (i.e., makes a handover decision).

4. HO request

The source base station eNB reports to a target base station eNB that the user device UE is requesting handover.

In this embodiment, when transmitting a handover request (HO request) to the target base station eNB, the source base station eNB also reports a calculated average throughput Rav(j;t) of the user device UE to the target base station eNB. More generally, any appropriate radio resource management (RRM) information may be transferred from the source base station eNB to the target base station eNB. The source base station eNB and the target base station eNB communicate with each other via the X2 I/F. The radio resource management (RRM) information may be transferred from the source base station eNB to the target base station eNB at any other timing than the timing of the fourth step (HO request). However, to reduce the number of messages exchanged between the source and target base stations, it is preferable to transfer the RRM information together with the handover request. This also makes it possible to prevent problems related to complicated handling of plural messages which may occur, for example, when one of the messages is not received properly or when the order of the messages is reversed in the transmission path.

5. Admission control

The target base station eNB determines whether to accept the handover request. In this example, it is assumed that the handover request is accepted. However, when, for example, the cell of the target base station eNB is congested, the handover request may be rejected.

6. HO request ack

The target base station eNB reports acceptance of the handover request to the source base station eNB.

7. DL allocation

The source base station eNB performs downlink scheduling (B), allocates downlink radio resources to the user device UE, and transmits a downlink scheduling grant indicating the allocation information via a downlink L1/L2 control channel to the user device UE.

8. HO command

The source base station eNB transmits a handover command (HO command) to the user device UE via a physical downlink shared channel (PDSCH) specified by the downlink scheduling grant.

9. DL data forwarding

After the handover of the user device UE is determined, the source base station eNB transfers packets for the user device UE to the target base station eNB via the X2 I/F.

10. Buffering

The target base station eNB stores the packets transferred from the source base station eNB in a buffer in preparation for the later transmission of the packets.

11. RACH

Through steps 7 and 8 described above, the user device UE determines that the handover request has been accepted. Then, the user device transmits a random access channel (RACH) to the target base station eNB to synchronize with the target cell.

12. UL grant + Timing Advance

The target base station eNB allocates uplink radio resources to the user device UE and also transmits a timing advance value to the user device UE if necessary.

13. HO complete

The user device UE reports completion of handover to the target base station eNB by using the allocated radio resources.

14. Packet data

The target base station eNB performs scheduling (C), allocates radio resources to packets for the user device UE, and transmits the packets to the user device UE. The scheduling at the timing C is performed using the average throughput Rav(j;t) reported from the source base station eNB. The average throughput is based on previous throughputs of the user device UE that has just moved into the target cell and is therefore suitable for use in scheduling based on a proportional fairness algorithm. Instead of the average throughput, an average of signal quality (such as SIR or CQI) may be used.

15. Packet data

At this stage, an upper node MME/SAE-GW that ranks above the base stations has not yet changed the path to the user device UE. Therefore, when receiving downlink packets for the user device UE, the upper node MME/SAE-GW transfers the packets to the source base station eNB.

16. DL data forwarding

When receiving packets for the user device UE that has been handed over to the target base station eNB, the source base station eNB transfers the packets to the target base station eNB as in step 9. The target base station eNB stores the packets transferred from the source base station eNB in a buffer in preparation for the later transmission of the packets.

17. HO complete

When completion of handover is reported by the user device UE in step 13, the target base station eNB reports the completion of handover to the upper node MME/SAE-GW.

18. Path switch

Upon receiving the handover completion report, the upper node MME/SAE-GW changes the data transmission path to the user device UE. In this example, the upper node MME/SAE-GW stops transferring downlink packets for the user device UE to the source base station eNB and starts transferring the packets to the target base station eNB.

19. HO complete ack

The upper node MME/SAE-GW reports to the target base station eNB that the data transmission path to the user device UE has been changed.

20. Release resources

When the change of the data transmission path is reported from the upper node MME/SAE-GW, the target base station eNB requests the source base station eNB to release relevant resources.

21. Release resources

According to the request from the target base station eNB, the source base station eNB releases the relevant resources.

22. Packet data

When receiving packets for the user device UE after changing the data communication path, the upper node MME/SAE-GW transfers the packets to the target base station eNB.

23. Packet data

The target base station eNB performs scheduling (D) and transmits the packets to the user device UE.

<BASE STATION>

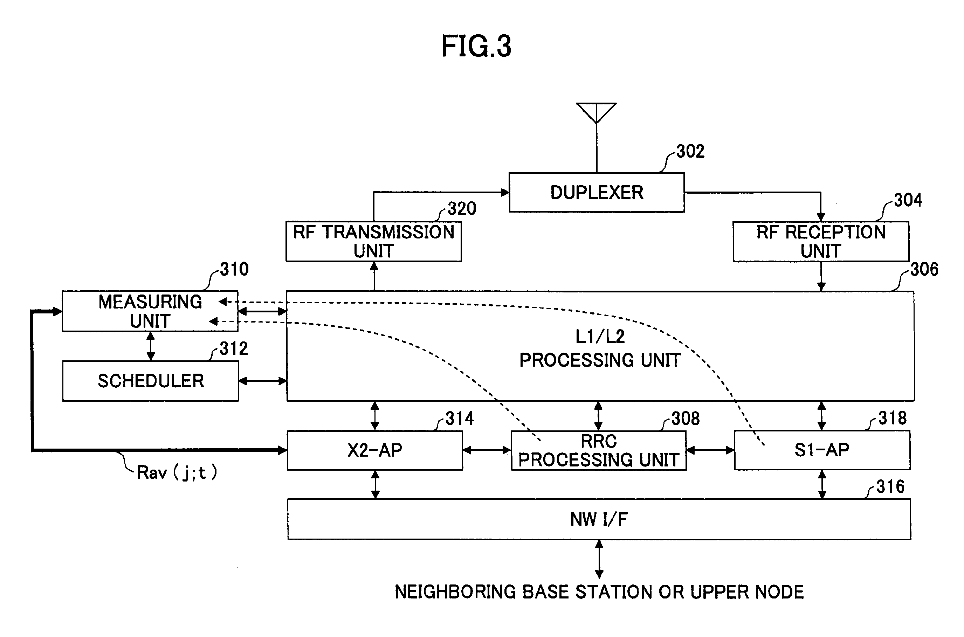

FIG. 3 shows a schematic block diagram of a base station of this embodiment. As shown in FIG. 3, the base station of this embodiment includes a duplexer 302 connected to an antenna, an RF reception unit 304, an L1/L2 processing unit 306, an RRC processing unit 308, a measuring unit 310, a scheduler 312, an inter-base-station communication processing unit (X2-AP) 314, a network interface (NW I/F) 316, a base-station-and-upper-node communication processing unit (S1-AP) 318, and an RF transmission unit 320.

The duplexer 302 properly separates transmission signals and received signals to be transmitted or received via the antenna.

The RF reception unit 304 converts a signal received from a user device into a baseband signal. For example, the RF reception unit 304 performs reception processing for a physical uplink shared channel (PUSCH) and a measurement report.

The L1/L2 processing unit 306 performs signal processing related to the physical layer (L1) and the MAC layer (L2). For example, the L1/L2 processing unit 306 generates scheduling grant information indicating resource allocation determined by the scheduler 312.

The RRC processing unit 308 performs signal processing related to the RRC protocol layer. In this embodiment, the RRC processing unit 308 determines whether to accept a handover request as in steps 3 and 5 of FIG. 2. Although not an essential feature, whether to accept a handover request in step 5 may be determined based on an average throughput (or SIR or CQI) Rav(j;t) reported from a source base station. For example, if a user communicating at a high average throughput enters the cell of a target base station when the target base station is heavily congested, the target base station becomes more congested and it becomes difficult to provide sufficient throughput for the user and the entire cell. Using an average throughput (or SIR or CQI) Rav(j;t) indicating previous throughputs (or SIRs or CQIs) of a user makes it possible for a target base station to accurately determine the influence of accepting the handover request of the user.

The measuring unit 310 obtains measurements of a parameter used in scheduling separately for uplink and downlink. Examples of the parameter include throughput, a transmission rate, SIR, and CQI. For example, the measuring unit 310 measures throughput of each radio bearer. Alternatively, the measuring unit 310 may be configured to measure signal quality such as SIR or CQI for each user. The measuring unit 310 obtains both instantaneous and average values of such a parameter. Also, as still another example, the measuring unit 310 may be configured to measure buffering time of each packet.

The scheduler 312 performs scheduling based on the measurements from the measuring unit 310. In this embodiment, the scheduler 312 performs scheduling based on a proportional fairness algorithm taking into account average throughputs in addition to instantaneous throughputs. For example, the measuring unit 310 calculates a ratio of an estimated instantaneous throughput R(j;t) to an average Rav(j;t) obtained from previous throughputs for each radio bearer j ("j" indicates an identifier of each radio bearer, and "t" indicates a parameter related to time). Then, the scheduler 312 allocates radio resources preferentially to a radio bearer i providing a higher ratio as expressed by the following formula:

$$\mathtt{i(t)=arg[max\{R(j;t)/Rav(j;t)\}]}$$

Although the average Rav(j;t) is used for scheduling in this embodiment, it may also be used for another purpose. For example, a combination of a data modulation scheme and a channel coding rate (modulation and coding scheme: MCS) may be determined based on the average Rav(j;t). Generally, the MCS is determined based on radio link quality (i.e., an MCS providing a high transmission rate is used when radio propagation conditions are good, and an MCS providing a low transmission rate is used when radio propagation conditions are poor). However, immediately after handover, i.e., until feedback from the user device becomes available, the MCS may be determined based on the average Rav(j;t).

The inter-base-station communication processing unit (X2-AP) 314 performs processing for communications between base stations. For example, the average Rav(j;t) is transmitted or received via the X2-AP 314 and the network interface (NW I/F) 316.

The NW I/F 316 interfaces communications between the base station and nodes (e.g., neighboring base stations and upper nodes) other than the user device UE.

The base-station-and-upper-node communication processing unit (S1-AP) 318 performs processing for communications between the base station and the upper node MME/SAE-GW.

The RF transmission unit 320 converts a baseband signal into a signal (such as a downlink L1/L2 control channel or a PDSCH) for wireless transmission to the user device.

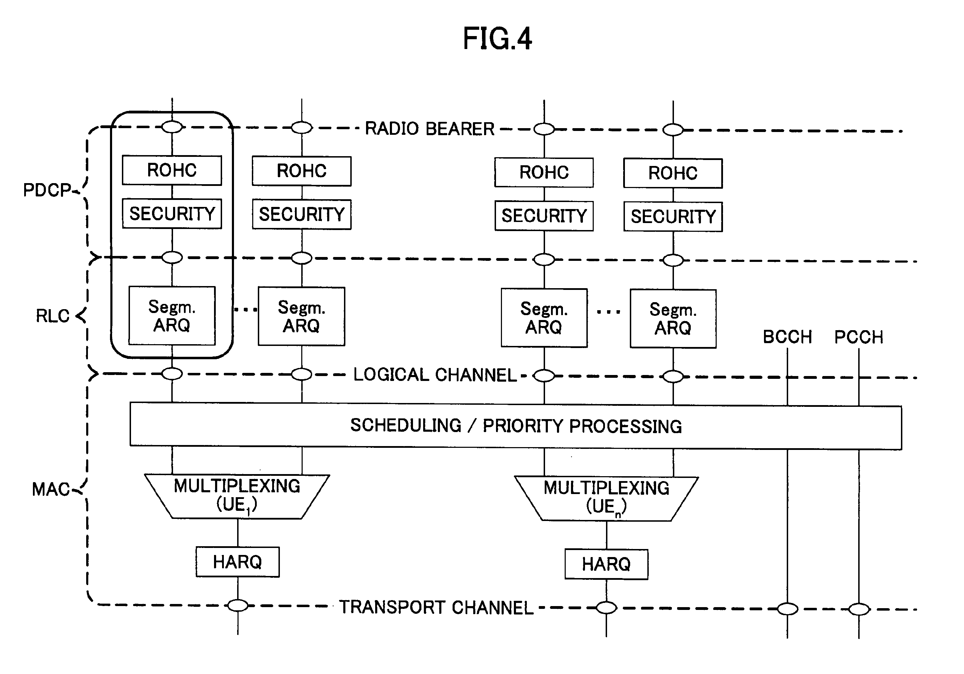

FIG. 4 shows a hierarchical model related to downlink transmission at a base station. As shown in FIG. 4, processing such as compression and encryption related to the PDCP protocol layer and processing such as ARQ related to the RLC protocol layer are performed for each of multiple radio bearers. Radio bearers are related to communications such as browsing and voice packet communications (VoIP) performed under various preset conditions. One or more radio bearers may be assigned to one user. In the MAC protocol layer, scheduling is performed based on a proportional fairness algorithm to allocate radio resources to the radio bearers. Also in the MAC protocol layer, the radio bearers are multiplexed user by user and transmitted to user devices after going through HARQ protocol processing. At each user device, the process shown in FIG. 4 is performed in reverse order. "Throughput" in this embodiment may be measured at any point in the process shown in FIG. 4. For example, throughput may be measured at a point (logical channel service access point (SAP)) between the RLC layer and the MAC layer, a point between the RLC layer and the PDCP layer, or a point (radio bearer SAP) between the PDCP and an upper protocol layer.

The present invention is not limited to the specifically disclosed embodiments, and variations and modifications may be made without departing from the scope of the present invention. Although specific values are used in the above descriptions to facilitate the understanding of the present invention, the values are just examples and different values may also be used unless otherwise mentioned. Although a proportional fairness algorithm is used for scheduling in the above embodiment, any scheduling algorithm that performs scheduling based on averages of previous measurements may be used. Although functional block diagrams are used to describe apparatuses in the above embodiments, the apparatuses may be implemented by hardware, software, or a combination of them.

The present international application claims priority from Japanese Patent Application No. 2007-198432 filed on July 31, 2007, the entire contents of which are hereby incorporated herein by reference.

**Claims**

1. A base station for a mobile communication system, the base station comprising:

   a scheduling unit configured to obtain scheduling information of radio bearers at least for each user and to allocate radio resources to the radio bearers based on the scheduling information; and
   an inter-base-station interface for communications with other base stations in the mobile communication system, wherein when a user is handed over from a cell of the base station to a cell of a target base station, the base station is configured to report at least a part of previous scheduling information of the user via the inter-base-station interface to the target base station.

2. The base station as claimed in claim 1, wherein the part of the previous scheduling information includes throughput.

3. The base station as claimed in claim 2, wherein the base station is configured to report an average of the throughput of each of the radio bearers to the target base station.

4. The base station as claimed in claim 1, wherein the part of the previous scheduling information includes signal quality.

5. The base station as claimed in claim 4, wherein the signal quality is represented by a received signal level, a propagation loss, a signal-to-interference ratio, or a channel quality indicator.

6. The base station as claimed in claim 4 or 5, wherein the base station is configured to report an average of the signal quality of each user to the target base station.

7. The base station as claimed in claim 1, wherein the part of the previous scheduling information includes buffering time of packets.

8. The base station as claimed in any one of claims 1 through 7, wherein the scheduling unit is configured to perform scheduling based on an average and an instantaneous value of the throughput.

9. The base station as claimed in any one of claims 1 through 7, wherein the scheduling unit is configured to perform scheduling based on an average and an instantaneous value of the signal quality.

10. The base station as claimed in any one of claims 1 through 7, wherein the scheduling unit is configured to perform scheduling based on the buffering time of packets.

**11.** The base station as claimed in any one of claims 1 through 10, wherein the base station is configured to report the part of the previous scheduling information to the target base station when transmitting a handover request to the target base station.

**12.** The base station as claimed in any one of claims 1 through 10, wherein the scheduling unit is configured to perform scheduling for a user handed over from a cell of a source base station to the cell of the base station based on a part of previous scheduling information reported from the source base station via the inter-base-station interface.

**13.** A method performed by a base station of a mobile communication system, the method comprising the steps of:

obtaining scheduling information of radio bearers at least for each user and allocating radio resources to the radio bearers based on the scheduling information; and
when a user is handed over from a cell of the base station to a cell of a target base station, reporting at least a part of previous scheduling information of the user via an inter-base-station interface to the target base station.

**14.** A handover-source base station that makes a handover decision, wherein after making the handover decision, the handover-source base station is configured to transmit a handover request including previous scheduling information obtained at the handover-source base station to a handover-target base station.

**15.** The handover-source base station as claimed in claim 14, wherein the handover-source base station is configured to transmit the previous scheduling information to the handover-target base station before a user device transmits a random access channel to the handover-target base station.

**16.** A method performed by a handover-source base station in a mobile communication system, the method comprising the steps of:

determining to hand over a user device in response to a request from the user device; and
transmitting a handover request signal to a handover-target base station,
wherein the handover request signal includes previous scheduling information obtained at the handover-source base station.

# FIG.1

**FIG.2**

| UE | SOURCE eNB | TARGET eNB | MME/SAE GW |
|---|---|---|---|

<1. UL GRANT> —A

<2. MEASUREMENT REPORT>

3. HO DECISION

<4. HO REQUEST>

5. ADMISSION CONTROL

<6. HO REQUEST ACK>

<7. DL ALLOCATION> —B

<8. HO COMMAND>

<9. DL DATA FORWARDING>

10. BUFFERING

<11. RACH>

<12. UL GRANT + TIMING ADVANCE>

<13. HO COMPLETE>

—C

<14. PACKET DATA>

<15. PACKET DATA>

<17. HO COMPLETE>

18. PATH SWITCH

<16. DL DATA FORWARDING>

<19. HO COMPLETE ACK>

<20. RELEASE RESOURCES>

<22. PACKET DATA>

21. RELEASE RESOURCES

—D

<23. PACKET DATA>

EP 2 175 673 A1

EP 2 175 673 A1

NEIGHBORING BASE STATION OR UPPER NODE

NW I/F

316 — S1-AP

308 — RRC PROCESSING UNIT

314 — X2-AP

318

Rav (j,t)

306 — L1/L2 PROCESSING UNIT

312 — SCHEDULER

310 — MEASURING UNIT

304 — RF RECEPTION UNIT

320 — RF TRANSMISSION UNIT

302 — DUPLEXER

FIG.3

# FIG.4

### INTERNATIONAL SEARCH REPORT

| International application No. |
| --- |
| PCT/JP2008/063696 |

A. CLASSIFICATION OF SUBJECT MATTER
*H04Q7/38(2006.01)i, H04Q7/30(2006.01)i*

According to International Patent Classification (IPC) or to both national classification and IPC

B. FIELDS SEARCHED

Minimum documentation searched (classification system followed by classification symbols)
H04Q7/38, H04Q7/30

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br><br>Y | JP 2005-526410 A (Qualcomm Inc.),<br>02 September, 2005 (02.09.05),<br>Abstract; Claims 1, 2, 9, 10; Par. Nos. [0032]<br>to [0034], [0053] to [0057]; Figs. 1, 2<br>& US 2003/0002460 A1 & EP 1400133 A<br>& WO 2003/003761 A2 & CA 2451232 A<br>& TW 235613 B & CN 1640169 A | 1-6,8,9,<br>11-16<br>7,10 |
| X<br><br>Y | JP 2003-348007 A (NEC Corp.),<br>05 December, 2003 (05.12.03),<br>Abstract; Par. Nos. [0059] to [0066]; Figs. 1<br>to 9<br>& US 2003/0179731 A1 & EP 1347614 A2 | 1-6,8,9,<br>11-16<br>7,10 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 October, 2008 (27.10.08) | Date of mailing of the international search report<br>04 November, 2008 (04.11.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/063696 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2002-518958 A  (Telefonaktiebolaget LM Ericsson (publ)), 25 June, 2002 (25.06.02), Abstract; Par. Nos. [0007], [0008] & US 6347091 B1        & EP 1088463 A & WO 1999/066748 A1      & AU 1447999 A & BR 9815914 A           & CA 2335767 A & TW 424377 B            & CN 1345518 A | 7,10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007198432 A

**Non-patent literature cited in the description**

- Evolved Universal Terrestrial Radio Access (E-UTRA) and Evolved Universal Terrestrial Radio Access Network (E-UTRAN); Overall description; Stage 2. *3GPP TS 36.300 (V8.0.0),* March 2007
- Physical Layer Aspects for Evolved UTRA. *3GPP TR 25.814 (V7.0.0),* June 2006
- **A. Jalali ; R. Padovani ; R. Pankaj.** Data throughput of CDMA-HDR a high efficiency-high data rate personal communication wireless system. *IEEE Proc. VTC Spring,* May 2000, 1854-1858
- **Y. Ofuji ; S. Abeta ; M. Sawahashi.** Comparison of packet scheduling algorithms focusing on user throughput in high speed downlink packet access. *IEICE Trans. Commun.,* January 2003, vol. E86-B (1), 132-141
- **S. Shakkottai ; A. Stolyar.** Scheduling algorithms for a mixture of real-time and non-real-time data in HDR. *Proc 17th International Teletraffic Congress,* September 2001